# EUROPÄISCHE PATENTANMELDUNG

(11) **EP 4 821 710 A1**
(43) Veröffentlichungstag der Anmeldung: **14.10.2026**
(21) Anmeldenummer: 25170108.2
(22) Anmeldetag: 11.04.2025
(51) Int. Cl.: B60D 1/48, B60D 1/56, B60R 19/34

(54) **STOSSFÄNGERANORDNUNG MIT ABSCHLEPPÖSE**

(71) Anmelder: Benteler Automobiltechnik GmbH, 33102 Paderborn (DE)
(72) Erfinder: RÖPER, Burkhard, 33104 Paderborn (DE); MOLLEMEIER, Elmar, 33129 Delbrück (DE); LÜTKE-BEXTEN, Ulrich, 33104 Paderborn (DE)
(74) Vertreter: Osterhoff, Utz

(57) **Zusammenfassung**

Die Erfindung betrifft eine Stoßfängeranordnung (1) für ein Kraftfahrzeug, aufweisende einen Querträger (2), welcher über Crashboxen (3) an das Kraftfahrzeug gekoppelt ist, wobei der Querträger (2) im Querschnitt als geschlossenes Hohlprofil ausgebildet ist, und den Querträger (2) durchgreifend eine Hülse (5) zur Aufnahme einer Abschleppöse angeordnet ist, dadurch gekennzeichnet, dass in einer Vorderwand (7) des Querträgers (2) ein Einschweißblech (6) angeordnet ist, wobei die Hülse (5) das Einschweißblech (6) durchgreift und an einer Rückseite (12) des Querträgers (2) die Hülse (5) einen Bund (11) aufweist und mit dem Bund (11) an der Rückseite (12) anliegt.

## Beschreibung

Die vorliegende Erfindung betrifft eine Stoßfängeranordnung gemäß den Merkmalen im Oberbegriff von Anspruch 1.

Aus dem Stand der Technik ist es bekannt, für Kraftfahrzeuge Stoßfängeranordnungen einzusetzen. Bei den Kraftfahrzeugen kann es sich um ein Elektrokraftfahrzeug handeln oder auch um ein Kraftfahrzeug, das mit einem verbrennungsmotorischen Antrieb ausgestattet ist. Auch kann ein Hybridfahrzeug verwendet werden.

Die Stoßfängeranordnung weist einen Querträger auf. Der Querträger erstreckt sich dabei im Wesentlichen über die Kraftfahrzeugbreite. Der Querträger weist insbesondere eine Krümmung um die Kraftfahrzeugvertikalrichtung auf. Zumeist ist ein solcher Stoßfänger über Crashboxen an dem Kraftfahrzeug, insbesondere Längsträgern des Kraftfahrzeuges gekoppelt.

Im Falle einer Fahrzeugpanne, jedoch auch beispielsweise bei Überseetransporten wird in ein Kraftfahrzeug eine Abschleppöse eingesetzt. Eine solche Abschleppöse muss an dem Kraftfahrzeug befestigt sein, da sie bei Nichtgebrauch, beispielsweise im Kofferraum des Kraftfahrzeuges gelagert ist.

Hierzu ist es bekannt, dass eine hülsenförmige Aufnahme zumeist mit einem Steckverschluss oder einem Innengewinde vorhanden ist. Die Abschleppöse wird dann mit einem stegförmigen bzw. bolzenförmigen Fortsatz in die Hülse eingesteckt. Im Anschluss daran kann dann eine entsprechende Kraft übertragen werden. Beispielsweise kann das Kraftfahrzeug abgeschleppt werden, in dem eine Zugkraft über die Abschleppöse übertragen wird. Auch kann das Kraftfahrzeug an einem Boden verzurrt werden, in dem ein entsprechendes Zurrmittel, beispielsweise ein Zurrgurt, von der Abschleppöse schräg nach unten verzurrt wird.

Es ist bekannt, entsprechende Hülsen an einem Stoßfängerquerträger zu befestigen.

Aufgabe der vorliegenden Erfindung ist es, eine Möglichkeit aufzuzeigen, eine solche Hülse präzise, großserientauglich und konstruktiv kostengünstig bei verbesserter Kraftübertragung an einer Stoßfängeranordnung zu befestigen.

Die zuvor genannte Aufgabe wird erfindungsgemäß mit den Merkmalen im Anspruch 1 gelöst.

Vorteilhafte Ausgestaltungsvarianten der Erfindung sind in den abhängigen Ansprüchen beschrieben.

Die Stoßfängeranordnung ist für ein Kraftfahrzeug geeignet. Sie weist einen Querträger auf, welcher über Crashboxen an dem Kraftfahrzeug gekoppelt ist.

Der Querträger selbst weist dabei einen gekrümmten bzw. bogenförmigen Verlauf auf. Die Krümmung ist um die Kraftfahrzeugvertikalrichtung gebogen ausgeführt. Die Krümmung weist bevorzugt einen sich verändernden Krümmungsradius auf. Insbesondere ist der Querträger in einem mittleren Bereich weniger stark gekrümmt und in den Endbereichen stärker gekrümmt.

An dem Querträger selbst sind Crashboxen gekoppelt. Der Querträger ist insbesondere aus einem Stahlwerkstoff ausgebildet. Der Querträger bzw. ein Profil, insbesondere Hutprofil des Querträgers kann beispielsweise aus einem warmumgeformten und pressgehärteten Kohlenstoffstahl hergestellt sein. Insbesondere weist dieser eine Zugfestigkeit Rm größer 1350 MPa auf.

Der Querträger selbst weist in seinem Querschnitt ein geschlossenes Hohlprofil auf. In bevorzugter Ausgestaltungsvariante ist dieses Hohlprofil durch ein Hutprofil gebildet. Die Öffnung des Hutprofils zeigt auf die Kraftfahrzeuglängsrichtung bezogen, bevorzugt nach vorne. Das Hutprofil ist dann mit einem Schließblech gekoppelt. Das Schließblech erstreckt sich in Kraftfahrzeugquerrichtung über einen Großteil der Breite bzw. Länge des Querträgers. Insbesondere erstreckt sich das Schließblech über die gesamte Breite bzw. Länge des Querträgers. Das Schließblech selbst kann aus einem Stahl ausgebildet sein, der eine Zugfestigkeit Rm von größer 500 MPa und kleiner 1200 MPa aufweist, insbesondere zwischen 500 MPa und 800 MPa. Dies hätte den Vorteil, dass das Schließblech selbst duktil ausgebildet ist. Der Querträger hat somit durch das Hutprofil eine hohe Eigensteifigkeit, durch das Schließblech jedoch eine entsprechende Dehnfähigkeit, so dass bei einem Poltest der Querträger nicht einknicken oder reißen würde.

Nunmehr ist den Querträger in Kraftfahrzeuglängsrichtung durchgreifend, eine Hülse zur Aufnahme einer Abschleppöse angeordnet. Die Hülse selbst ist bevorzugt auch aus einem Stahlwerkstoff hergestellt. In der Hülse kann beispielsweise ein Innengewinde ausgebildet sein, so dass eine Abschleppöse mit ihrem stegförmigen bzw. bolzenförmigen Fortsatz in die Hülse eingeschraubt wird.

Erfindungsgemäß ist nunmehr vorgesehen, dass in einer Vorderwand des Querträgers ein Einschweißblech angeordnet ist. Das Einschweißblech ist somit um den Bereich herum, in dem die Hülse die Vorderwand durchgreifen würde, angeordnet. Die Vorderwand des Querträgers weist somit einen Ausschnitt bzw. eine Aussparung auf. In diesem Ausschnitt bzw. der Aussparung ist dann das Einschweißblech angeordnet. Das Einschweißblech selbst weist dann eine Öffnung auf, in dem das Einschweißblech von der Hülse durchgriffen ist. Das Einschweißblech weist somit einen Bereich bzw. Aufnahmebereich auf, der selbst plan ausgebildet ist bzw. als Ebene ausgebildet ist.

Dieser kann auch als Aufnahmeebene gezeigt werden. Radial umlaufend um die Außenmantelfläche der Hülse ist bevorzugt ein Abstand von 3 mm bis 20 mm, insbesondere 4 mm bis 10 mm ausgebildet, in welchem diese Aufnahmeebene in dem Einschweißblech ausgebildet ist und in sich selbst plan verläuft, d. h. ohne Biegung bzw. ohne Krümmung.

Die Hülse selbst weist weiterhin bevorzugt einen Bund bzw. Stufenabsatz auf. Die Hülse liegt dann mit dem Bund bzw. Stufenabsatz an der Rückseite des Querträgers an. Die Hülse durchgreift auch die Rückseite und liegt somit formschlüssig mit dem Bund an der Rückseite des Querträgers an. Die Begriffe Rückseite und Rückwand des Querträgers werden im Rahmen der Erfindung als Synonyme gebraucht.

Durch insbesondere das Einschweißblech werden folgende Vorteile erreicht. Das Einschweißblech ist als Blechumformbauteil ausgebildet, insbesondere als Tiefziehbauteil. Das Einschweißblech kann somit einfach durch Blechumformen hergestellt werden und somit an die geometrische Gegebenheit bzw. Forderung angepasst werden. Insbesondere ist eine Vorderwand des Querträgers im Bereich der Hülse für die Abschleppöse auf die Kraftfahrzeuglängsrichtung bezogen, nach hinten versetzt. Die Hülse ist insbesondere abschnittsweise, bevorzugt umlaufend mit dem Einschweißblech verschweißt. Hierzu ist es notwendig, dass eine vordere Stirnseite der Hülse zu der Vorderwand des Querträgers einen Überstand aufweist bzw. mit einem Abstand übersteht. Dies ist besonders wichtig, dass die Hülse selbst nach dem Verschweißen mit der Vorderwand ihre Festigkeit beibehält und die Stirnfläche der Hülse nicht durch einen Schweißvorgang, insbesondere eine Wärmeeinflusszone, deformiert wird oder ähnliches. Damit nunmehr die Hülse nicht in Kraftfahrzeuglängsrichtung nochmals deutlich über die Vorderwand des Querträgers übersteht, ist somit das Einschweißblech auf die Kraftfahrzeuglängsrichtung bezogen, insbesondere eine Ebene des Einschweißblechs zur Aufnahme der Hülse, nach hinten versetzt. Hierdurch kann sichergestellt werden, dass die Stirnseite der Hülse gegenüber der Vorderwand des Querträgers auf der einen Seite zum einen übersteht, zum anderen der Gesamtüberstand der Hülse gegenüber der Vorderwand des Querträgers nicht signifikant ist. Dieser Überstand beträgt bevorzugt 6 mm bis 20 mm, insbesondere 7 mm bis 15 mm und bevorzugt 8 mm bis 10 mm.

Hierzu weist insbesondere das Einschweißblech eine Ebene, insbesondere eine Aufnahmeebene, auf. Die Aufnahmeebene ist im Wesentlichen parallel orientiert verlaufend zu einer Ebene, aufgespannt durch die Kraftfahrzeugquerrichtung und Kraftfahrzeugvertikalrichtung. Die Aufnahmeebene bzw. Ebene des Einschweißblechs kann jedoch ± 5° in einem Winkel zu der Ebene aufgespannt durch die Kraftfahrzeugvertikalrichtung in Kraftfahrzeugquerrichtung angeordnet sein.

An der Rückwand bzw. Rückseite ist es vorstellbar, dass der Bund gegenüber einer Längsachse der Hülse selbst schräg verläuft und somit an die Kontur bzw. den gekrümmten bzw. schrägen Verlauf der Rückwand des Querträgers angepasst ist. Die Hülse liegt formschlüssig an der Rückwand an und kann somit in Kraftfahrzeuglängsrichtung eine entsprechende Zugkraft übertragen. Der Bund bzw. die Hülse kann zusätzlich mit der Rückwand thermisch gefügt sein.

In einer weiteren bevorzugten Ausgestaltungsvariante ist die Rückwand derart verprägt, dass auch in der Rückwand des Querträgers im Bereich der Hülse eine Aufnahmeebene ausgebildet ist und diese Aufnahmeebene im Wesentlichen parallel zur Ebene aufgespannt durch die Kraftfahrzeugquerrichtung und Kraftfahrzeugvertikalrichtung verläuft. In diesem Falle ist der Bund radial umlaufend und im Wesentlichen rechtwinklig zu der Längsachse der Hülse ausgebildet. Der Bund kann somit auch formschlüssig aufgrund der Aufnahmeebene in der Rückwand anliegen.

Damit das Einschweißblech ebenfalls optimal eine Kraftübertragung in Kraftfahrzeuglängsrichtung bereitstellt, ist dieses von hinten an die Vorderwand des Querträgers anliegend an diesem befestigt, insbesondere thermisch gefügt, insbesondere verschweißt. Zusätzlich ist das Einschweißblech dann mit der Hülse verschweißt. Auch hier wird eine Zugkraft übertragen in Kraftfahrzeuglängsrichtung, und somit optimal hinsichtlich des auftretenden Lastpfades abgestützt.

Der Zusammenbau des Querträgers erfolgt insbesondere als Hutprofil, so dass zunächst die Hülse eingesetzt werden kann und von der Innenseite mit der Rückwand optional verschweißt werden könnte, dann von vorne ein Schließblech an das Hutprofil angesetzt wird. Zuvor ist das Schließblech dann bevorzugt mit dem Einschweißblech gekoppelt. Nach Ansetzen des Schließblechs und Verschweißen des Schließblechs mit dem Hutprofil wird dann die Hülse das Einschweißblech durchgreifend, auch noch mit dem Einschweißblech verschweißt.

Weiterhin bevorzugt ist insbesondere zur Bereitstellung einer Ebene bzw. Aufnahmeebene an dem Einschweißblech auf die Kraftfahrzeugquerrichtung bezogen innenseitig ein Teil des Einschweißblechs nach vorne gebogen. Nach vorne gebogen bedeutet in diesem Sinne in Kraftfahrzeuglängsrichtung orientiert verlaufend gebogen. Ein auf die Kraftfahrzeugquerrichtung bezogen außenliegender Teil des Einschweißblechs ist dann nach hinten gebogen ebenfalls bezogen auf die Kraftfahrzeuglängsrichtung. Somit wird eine Ebene bereitgestellt, die zumindest teilweise gegenüber einer Vorderwand des Querträgers auf die Kraftfahrzeuglängsrichtung bezogen, nach hinten versetzt ist.

Die Hülse selbst kann besonders einfach gefertigt sein und einen über ihre Länge annähernd konstanten Außendurchmesser aufweisen.

Der Bund kann einstückig mit der Hülse ausgebildet sein, jedoch auch selbst aufgeschweißt sein.

In Verbindung mit einer vorzugsweise planen Aufnahmeebene des Einschweißblechs, in welcher eine vordere Öffnung ausgebildet und von der Hülse durchdrungen ist und einer insbesondere zylindrischen Hülse mit konstantem Außendurchmesser, wird das Verschweißen der Hülse am Einschweißblech erleichtert.

Die Öffnung im Bereich des Einschweißblechs und in der Rückwand des Querträgers sind bevorzugt als Spielpassung zu der Hülse ausgebildet. Somit kann die Hülse besonders montagefreundlich in den Querträger eingesetzt werden und Toleranzketten-Probleme aufgrund der mehrstufigen Fügefolge vermieden werden.

Weitere Vorteile, Merkmale, Eigenschaften und Aspekte der vorliegenden Erfindung sind Gegenstand der nachfolgenden Beschreibung. Bevorzugte Ausgestaltungsvarianten werden in schematischen Figuren dargestellt. Diese dienen dem einfacheren Verständnis der Erfindung. Es zeigen
- Figur 1: eine perspektivische Ansicht einer Stoßfängeranordnung,
- Figur 2: eine Längsschnittansicht durch die Kraftfahrzeuglängsrichtung x sowie die Kraftfahrzeugquerrichtung y,
- Figur 3: eine alternative Ausgestaltungsvariante,
- Figur 4: eine alternative Ausgestaltungsvariante,
- Figur 5: eine alternative Ausgestaltungsvariante zu Figur 2,
- Figur 6: einen Endbereich eines Querträgers

In den Figuren werden für gleiche oder ähnliche Bauteile dieselben Bezugszeichen verwendet, auch wenn eine wiederholte Darstellung oder Aufzählung entfällt. Die einzelnen Ausgestaltungsvarianten können dabei beliebig im Rahmen der Erfindung untereinander kombiniert werden mit einzelnen Merkmalen, ohne den Rahmen dieser Offenbarung zu verlassen.

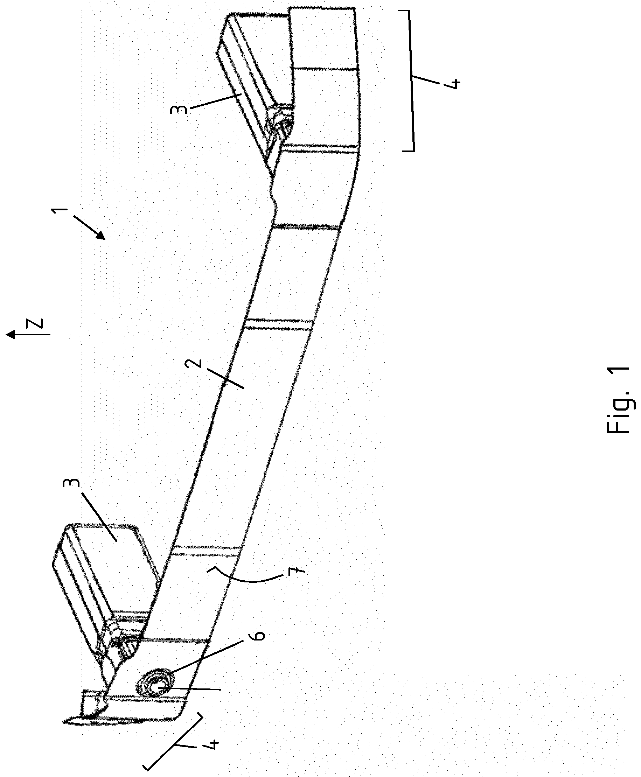

Figur 1 zeigt eine perspektivische Ansicht einer Stoßfängeranordnung 1. Diese weist einen Querträger 2 auf. Der Querträger 2 ist jeweils mit Crashboxen 3 gekoppelt. Die Endbereiche 4 des Querträgers 2 weisen eine stärkere Krümmung um die Kraftfahrzeugvertikalrichtung Z auf. Im Bereich der auf die Bildebene bezogen linken Crashbox 3 ist eine Hülse 5 angeordnet, um eine nicht näher dargestellte Abschleppöse einzusetzen. Die Hülse 5 umrandet radial umlaufend einen Bereich bzw. Aufnahmebereich in der Vorderwand des Querträgers 2. Die weisen einen Bereich bzw. Aufnahmebereich auf, in dem ein Einschweißblech 6 in der Vorderwand 7 angeordnet ist.

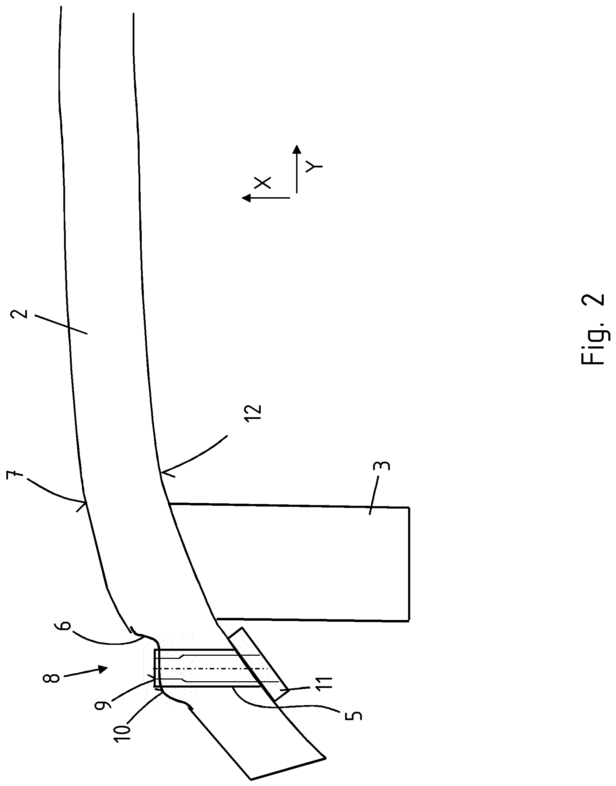

Figur 2 zeigt eine Längsschnittansicht durch die Kraftfahrzeuglängsrichtung x sowie die Kraftfahrzeugquerrichtung Y. Zu erkennen ist, dass in der Vorderwand 7 ein Ausschnitt 8 vorhanden ist, in dem das Einschweißblech 6 angeordnet ist. Das Einschweißblech 6 ist auf die Kraftfahrzeuglängsrichtung x bezogen, von hinten an der Vorderwand 7 anliegend angeordnet. Somit hintergreift das Einschweißblech 6 die Vorderwand 7. Wird eine Zugkraft in Kraftfahrzeuglängsrichtung X auf die Hülse 5 aufgebracht durch eine nicht näher gezeigte in der Hülse 5 eingeschraubte Abschleppöse, so wirkt sich dies vorteilig auf den Kraftfluss aus. Das hinter der Vorderwand 7 liegende Einschweißblech 6 ist nicht näher eingezeichnet mit der Vorderwand 7 verschweißt.

Ein vorderes Ende bzw. eine Stirnseite 9 der Abschleppöse steht somit gegenüber dem Einschweißblech 6 über. Insbesondere ist in dem Einschweißblech 6 dazu eine Ebene bzw. Aufnahmeebene 10 ausgebildet. Gegenüber dieser Aufnahmeebene 10 ist die Stirnseite 9 der Öse auf die Kraftfahrzeuglängsrichtung X überstehend angeordnet. Eine nicht näher dargestellte, zumindest abschnittsweise, insbesondere vollständig umlaufende Schweißnaht im vorderen Bereich der Öse mit dem Einschweißblech 6, gelangt somit nicht an die Stirnseite 9.

Gleichzeitig wird jedoch der erfindungsgemäße Vorteil erreicht, dass die Stirnseite 9 nicht noch zusätzlich weiter in Kraftfahrzeuglängsrichtung X über die Vorderwand 7 übersteht, sondern relativ gesehen, bezogen auf die Vorderwand 7 zumindest abschnittsweise zurückversetzt ist. Würde die Vorderwand 7 hier einen gekrümmten durchgehenden Verlauf aufweisen, so würde die Stirnseite 9 der Hülse 5 noch weiter in Kraftfahrzeuglängsrichtung x über die Vorderwand 7 indiesem Längenabschnitt hinweg zeigen.

Eine auf die Kraftfahrzeuglängsrichtung x bezogen Rückseite bzw. Rückwand 12 der Hülse 5 ist mit einem Bund 11 versehen. Der Bund 11 kann auch als Stufenabsatz bezeichnet werden. Dieser ist mit einer Rückseite 12 des Querträgers 2 formschlüssig anliegend und optional ergänzend, zumindest abschnittsweise, insbesondere vollständig umlaufend verschweißt. Hierbei kann der Bund 11 mit der äußeren Rückseite auf die Längsrichtung bezogen von hinten verschweißt sein. Auch kann ein hinterer Teil der Hülse 5 mit einem Innenteil der Rückseite 12 umlaufend verschweißt sein. Insbesondere, wenn der Querträger 2 als Hutprofil ausgebildet ist, kann zunächst die Hülse eingesetzt werden und dann von innen im Hutprofil verschweißt werden. Ferner ist zu erkennen, dass die Hülse 5 auf die Kraftfahrzeugquerrichtung Y bezogen außerhalb der Crashbox 3 außenliegend angeordnet ist.

Das Einschweißblech 6 ist an einer Innenseite auf die Kraftfahrzeugquerrichtung Y bezogen nach vorne, mithin in Kraftfahrzeuglängsrichtung X zeigend, umgebogen. Ein auf die Kraftfahrzeugrichtung bezogen äußerer Teil der Hülse 5 ist auf die Kraftfahrzeuglängsrichtung x nach hinten umgebogen.

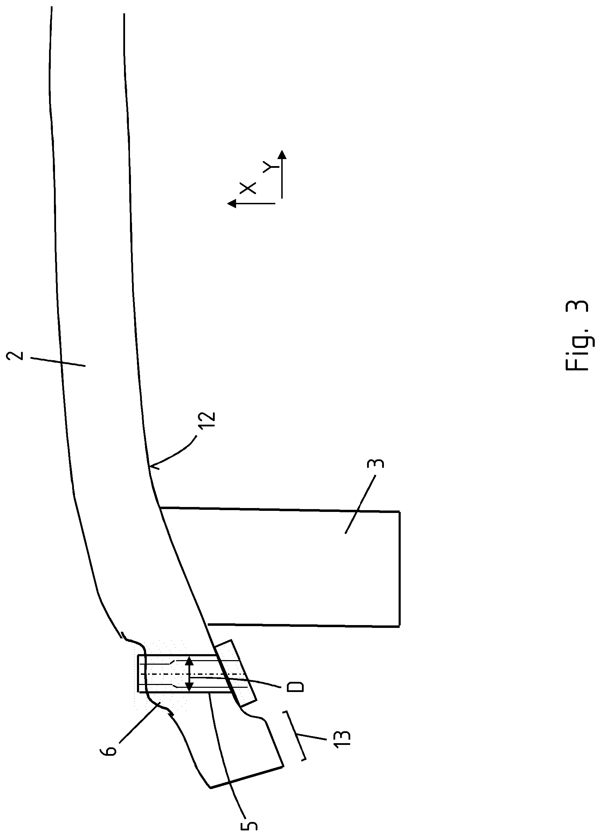

Figur 3 zeigt eine alternative Ausgestaltungsvariante. Hierbei ist ebenfalls ein Einschweißblech 6 im Bereich der Hülse 5 eingesetzt. Das Einschweißblech 6 weist insbesondere eine Erstreckung in die Kraftfahrzeugquerrichtung Y auf, die beispielsweise dem 1,5fachen bis zum 5fachen, insbesondere dem 2fachen bis 3fachen des Durchmessers D der Hülse 5 entspricht. Entsprechend weist das Einschweißblech 6 auch eine nicht näher dargestellte Erstreckung in Kraftfahrzeugvertikalrichtung Z auf, die dem 1,5fachen bis 5fachen, insbesondere dem 2fachen bis 3fachen des Durchmessers D der Hülse 5 entspricht. Die Rückseite 12 ist bezogen auf die Kraftfahrzeuglängsrichtung X nach vorne hin versetzt. Ein äußerer Endabschnitt 13 weist eine größere Tiefe in Kraftfahrzeuglängsrichtung X auf.

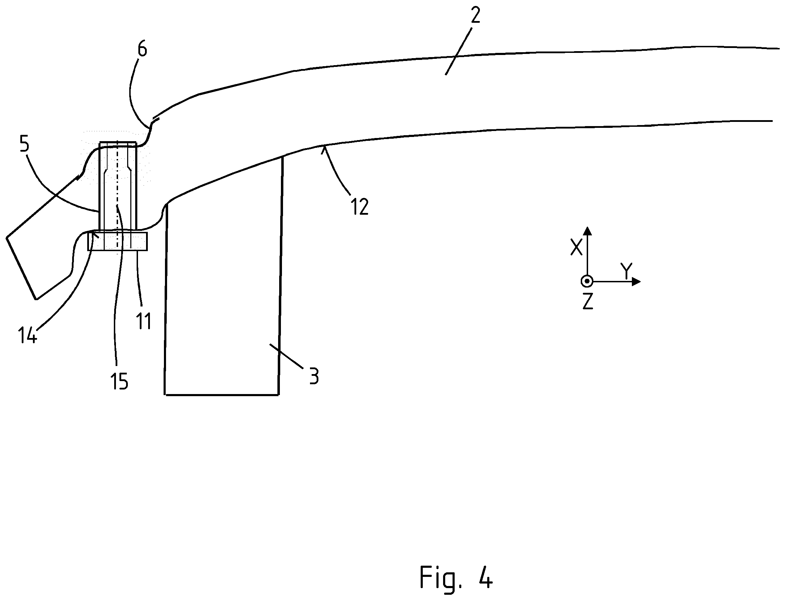

Figur 4 zeigt eine alternative Ausgestaltungsvariante. Hierbei ist an der Rückseite 12 des Querträgers 2 eine Ebene 14 bzw. Aufnahmeebene dargestellt. Diese ist im Wesentlichen parallel orientiert zu einer Ebene aufgespannt durch die Kraftfahrzeugquerrichtung Y und Kraftfahrzeugvertikalrichtung Z. Der Bund 11 ist somit im Wesentlichen rechtwinklig angeordnet. Eine nicht näher dargestellte Übertragung einer Zugkraft in Kraftfahrzeuglängsrichtung X kann somit optimal eingeleitet werden. Die Ebene 14 in der Rückseite 12 des Querträgers 2 kann auch auf alle anderen Ausführungsvarianten übertragen werden, ohne dabei den Rahmen der Erfindung zu verlassen.

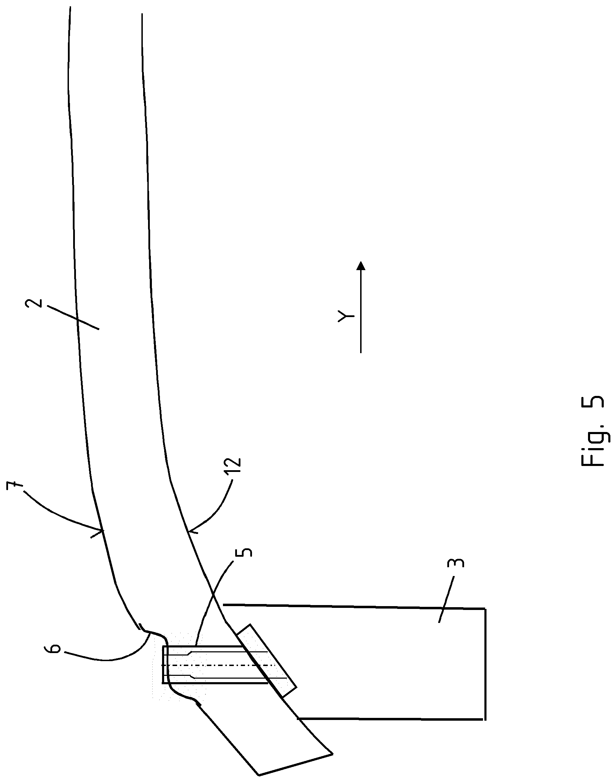

Figur 5 zeigt eine alternative Ausgestaltungsvariante zu Figur 2. Hierbei ist die Lage bezogen auf die Kraftfahrzeugquerrichtung y der Hülse 5 derart verschoben, dass die Hülse 5 in der Crashbox 3 angeordnet ist. Die Fertigungsmöglichkeit bietet hier die Möglichkeit, dass zunächst der Querträger 2 als Hutprofil bereitgestellt wird, die Hülse 5 eingeschweißt wird, dann die Crashbox 3 an das Hutprofil, mithin an die Rückseite 12, gekoppelt wird. Dann kann wiederum die Vorderwand 7, beispielsweise in Form eines Schließblechs angeordnet werden, welche zuvor mit dem Einschweißblech 6 gekoppelt ist.

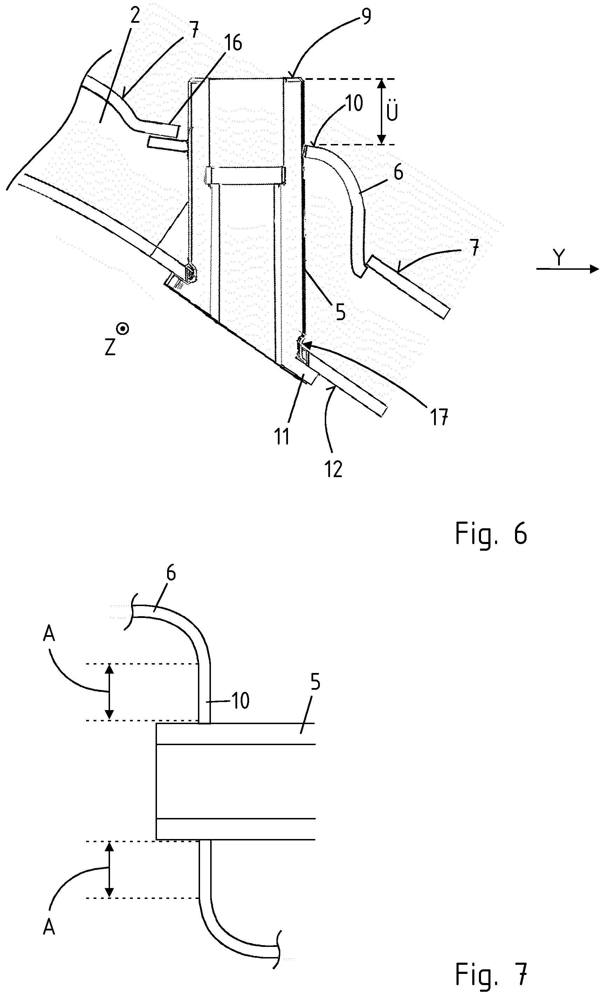

Figur 6 zeigt einen Endbereich eines Querträgers 2. Auch hier ist das Einschweißblech 6 angeordnet. Dabei ist jedoch bezogen auf die Kraftfahrzeugquerrichtung Y innenseitig nicht das Einschweißblech 6 umgeformt, sondern die Vorderwand 7 des Querträgers 2 zur Aufnahme des Einschweißbleches 6 umgeformt. Hierzu ist zunächst die Vorderwand 7 stärker gekrümmt um die Kraftfahrzeugvertikalrichtung z und dann wiederum mit einem Steg 16 in Kraftfahrzeugquerrichtung Y orientiert. Das Einschweißblech 6 hintergreift dann den Steg 16 sowie einen Teil der Vorderwand 7 außenliegend und ist nicht näher dargestellt mit diesem gefügt. Der Bund 11 liegt formschlüssig an der Rückseite 12 an. Im Bereich des Bundes 11 kann die Hülse 5 eine Nut 17 bzw. eine Einschnürung aufweisen. Hiermit kann die Hülse 5 formschlüssig zusätzlich in die Rückwand 12 eingreifen, beispielsweise mit einer Presspassung.

Exemplarisch auch für alle anderen Ausführungsvarianten sowie die allgemeine Beschreibung gilt, dass der dargestellte Überstand Ü erfindungsgemäß ausgebildet sein kann. Damit steht die vordere Stirnseite 9 der Hülse 5 gegenüber der Aufnahmeebene 10 über. Dieser Überstand beträgt bevorzugt 6 mm bis 20 mm, insbesondere 7 mm bis 15 mm und besonders bevorzugt 8 mm bis 10 mm.

Ferner ist in Figur 7 dargestellt ein Längsschnitt durch eine Hülse 5 mit Einschweißblech 6. Zu erkennen ist, dass die Aufnahmeebene 10 als ebene bzw. plane Fläche ausgebildet ist. Auch dies gilt für alle Ausführungsvarianten sowie die allgemeine Beschreibung. Ein Abstand A ist radial umlaufend um die Außenmantelfläche der Hülse 5 ausgebildet. Dieser Abstand A ergibt eine flächenmäßige Erstreckung der Aufnahmeebene 10. Somit eine nicht näher dargestellte Schweißnaht, die zwischen Einschweißblech 6 und Hülse 5 ausgebildet wird, möglichst gut aufbringbar. Dieser Abstand A beträgt bevorzugt radial umlaufend mindestens 3 mm und maximal 20 mm, bevorzugt zwischen 4 mm und 10 mm. Die Aufnahmeebene 10 in dem Einschweißblech 6 kann somit bei einer Stirnansicht selbst rund ausgebildet sein. Die Aufnahmeebene 10 kann jedoch auch eckig ausgebildet sein. Es ist jedoch überall mindestens der vorgenannte Abstand A vorgegeben.

### Bezugszeichen:

- 1: Stoßfängeranordnung
- 2: Querträger
- 3: Crashbox
- 4: Endbereich
- 5: Hülse
- 6: Bereich zu 7
- 7: Vorderwand
- 8: Ausschnitt
- 9: Stirnseite
- 10: Aufnahmeebene
- 11: Bund
- 12: Rückseite zu 2
- 13: Endabschnitt zu 2
- 14: Ebene
- 15: Mittellängsachse zu 5
- 16: Steg
- 17: Nut
- A: Abstand
- D: Durchmesser/Außendurchmesser
- Ü: Überstand
- X: Kraftfahrzeuglängsrichtung
- Y: Kraftfahrzeugquerrichtung
- Z: Kraftfahrzeugvertikalrichtung

## Patentansprüche

1. Stoßfängeranordnung (1) für ein Kraftfahrzeug, aufweisende einen Querträger (2), welcher über Crashboxen (3) an das Kraftfahrzeug gekoppelt ist, wobei der Querträger (2) im Querschnitt als geschlossenes Hohlprofil ausgebildet ist, und den Querträger (2) durchgreifend eine Hülse (5) zur Aufnahme einer Abschleppöse angeordnet ist, **dadurch gekennzeichnet, dass** in einer Vorderwand (7) des Querträgers (2) ein Einschweißblech (6) angeordnet ist, wobei die Hülse (5) das Einschweißblech (6) durchgreift und an einer Rückseite (12) des Querträgers (2) die Hülse (5) einen Bund (11) aufweist und mit dem Bund (11) an der Rückseite (12) anliegt.

2. Stoßfängeranordnung (1) nach Anspruch 1, **dadurch gekennzeichnet, dass** der Querträger (2) mindestens einen um die Kraftfahrzeugvertikalrichtung (Z) gekrümmten Längenabschnitt aufweist, wobei die Hülse (5) im gekrümmten Längenabschnitt angeordnet ist.

3. Stoßfängeranordnung (1) nach Anspruch 1 oder 2, **dadurch gekennzeichnet, dass** der Querträger (2) aus einem Hutprofil mit einem Schließblech ausgebildet ist.

4. Stoßfängeranordnung (1) nach einem der vorgenannten Ansprüche, **dadurch gekennzeichnet, dass** das Einschweißblech (6) eine Ebene aufweist, die im Wesentlichen parallel zu einer Ebene verläuft, die aufgespannt ist durch die Kraftfahrzeugvertikalrichtung (Z) und die Kraftfahrzeugquerrichtung (Y).

5. Stoßfängeranordnung (1) nach einem der vorgenannten Ansprüche, **dadurch gekennzeichnet, dass** das Einschweißblech (6) bezogen auf die die Mitte des Querträgers innenseitig nach vorne umgeformt ist und außenseitig nach hinten.

6. Stoßfängeranordnung (1) nach einem der Ansprüche 1 bis 5, **dadurch gekennzeichnet, dass** in Kraftfahrzeuglängsrichtung (X) nach vorne zeigend das Schließblech angeordnet ist, wobei das Schließblech die Vorderwand (7) des Querträgers (2) bildet und dahinter das Einschweißblech (6) angeordnet ist.

7. Stoßfängeranordnung (1) nach einem der vorgenannten Ansprüche, **dadurch gekennzeichnet, dass** die Hülse (5) einen Außendurchmesser (D) aufweist, welcher über den Verlauf der Hülse (5) konstant ausgebildet ist.

8. Stoßfängeranordnung (1) nach einem der vorgenannten Ansprüche, **dadurch gekennzeichnet, dass** die Hülse (5) an einem fahrzeugseitigen Ende einen Bund (11) aufweist, welcher größer ist als der konstante Außendurchmesser (D) eines vorderen, zylindrischen Hülsenabschnitts.

9. Stoßfängeranordnung (1) nach einem der vorgenannten Ansprüche, **dadurch gekennzeichnet, dass** die Hülse (5) mit der Vorderwand (7) und optional mit der Rückseite (12) radial umlaufend zumindest abschnittsweise verschweißt ist, bevorzugt vollständig.

10. Stoßfängeranordnung (1) nach einem der vorgenannten Ansprüche, **dadurch gekennzeichnet, dass** der Querträger (2) aus einem warmumgeformten und pressgehärteten Stahl hergestellt ist, insbesondere mit einer Zugfestigkeit Rm größer 1350MPa.

11. Stoßfängeranordnung (1) nach einem der vorgenannten Ansprüche, **dadurch gekennzeichnet, dass** eine Öffnung der vorderen und/oder hinteren Aufnahmeebene (10) als Spielpassung zu der Hülse (5) ausgebildet ist.

12. Stoßfängeranordnung (1) nach einem der vorgenannten Ansprüche, **dadurch gekennzeichnet, dass** das Einschweißblech (6) eine plane Aufnahmeebene (10) aufweist, parallel orientiert verlaufend ± 5° zu einer Ebene, aufgespannt durch die Kraftfahrzeugquerrichtung (Y) und Kraftfahrzeugvertikalrichtung (Z).

13. Stoßfängeranordnung (1) nach einem der vorgenannten Ansprüche, **dadurch gekennzeichnet, dass** der Bund (11) gegenüber einer Längsachse der Hülse (5) an der Rückwand (12) schräg verläuft und somit an die schräge Kontur der Rückwand (12) des Querträgers (2) angepasst ist, wobei die Hülse (5) formschlüssig an der Rückwand (12) anliegt und mit der Rückwand (12) thermisch gefügt ist.

## Geänderte Patentansprüche

### Geänderte Patentansprüche gemäss Regel 137(2) EPÜ.

1. Stoßfängeranordnung (1) für ein Kraftfahrzeug, aufweisende einen Querträger (2), welcher über Crashboxen (3) an das Kraftfahrzeug gekoppelt ist, wobei der Querträger (2) im Querschnitt als geschlossenes Hohlprofil ausgebildet ist, und den Querträger (2) durchgreifend eine Hülse (5) zur Aufnahme einer Abschleppöse angeordnet ist, wobei in einer Vorderwand (7) des Querträgers (2) ein Einschweißblech (6) angeordnet ist, wobei die Hülse (5) das Einschweißblech (6) durchgreift und an einer Rückseite (12) des Querträgers (2) die Hülse (5) einen Bund (11) aufweist und mit dem Bund (11) an der Rückseite (12) anliegt, **dadurch gekennzeichnet, dass** das Einschweißblech (6) eine Ebene aufweist, die im Wesentlichen parallel oder in einem Winkel von ± 5° zu einer Ebene verläuft, die aufgespannt ist durch die Kraftfahrzeugvertikalrichtung (Z) und die Kraftfahrzeugquerrichtung (Y), wobei der Querträger (2) mindestens einen um die Kraftfahrzeugvertikalrichtung (Z) gekrümmten Längenabschnitt aufweist, wobei die Hülse (5) im gekrümmten Längenabschnitt angeordnet ist.

2. Stoßfängeranordnung (1) nach Anspruch 1, **dadurch gekennzeichnet, dass** der Querträger (2) aus einem Hutprofil mit einem Schließblech ausgebildet ist.

3. Stoßfängeranordnung (1) nach Anspruch 1 oder 2, **dadurch gekennzeichnet, dass** das Einschweißblech (6) bezogen auf die die Mitte des Querträgers innenseitig nach vorne umgeformt ist und außenseitig nach hinten.

4. Stoßfängeranordnung (1) nach einem der Ansprüche 1 bis 3, **dadurch gekennzeichnet, dass** in Kraftfahrzeuglängsrichtung (X) nach vorne zeigend das Schließblech angeordnet ist, wobei das Schließblech die Vorderwand (7) des Querträgers (2) bildet und dahinter das Einschweißblech (6) angeordnet ist.

5. Stoßfängeranordnung (1) nach einem der vorgenannten Ansprüche, **dadurch gekennzeichnet, dass** die Hülse (5) einen Außendurchmesser (D) aufweist, welcher über den Verlauf der Hülse (5) konstant ausgebildet ist.

6. Stoßfängeranordnung (1) nach einem der vorgenannten Ansprüche, **dadurch gekennzeichnet, dass** die Hülse (5) an einem fahrzeugseitigen Ende einen Bund (11) aufweist, welcher größer ist als der konstante Außendurchmesser (D) eines vorderen, zylindrischen Hülsenabschnitts.

7. Stoßfängeranordnung (1) nach einem der vorgenannten Ansprüche, **dadurch gekennzeichnet, dass** die Hülse (5) mit der Vorderwand (7) und optional mit der Rückseite (12) radial umlaufend zumindest abschnittsweise verschweißt ist, bevorzugt vollständig.

8. Stoßfängeranordnung (1) nach einem der vorgenannten Ansprüche, **dadurch gekennzeichnet, dass** der Querträger (2) aus einem warmumgeformten und pressgehärteten Stahl hergestellt ist, insbesondere mit einer Zugfestigkeit Rm größer 1350MPa.

9. Stoßfängeranordnung (1) nach einem der vorgenannten Ansprüche, **dadurch gekennzeichnet, dass** eine Öffnung der vorderen und/oder hinteren Aufnahmeebene (10) als Spielpassung zu der Hülse (5) ausgebildet ist.

10. Stoßfängeranordnung (1) nach einem der vorgenannten Ansprüche, **dadurch gekennzeichnet, dass** das Einschweißblech (6) eine plane Aufnahmeebene (10) aufweist, parallel orientiert verlaufend ± 5° zu einer Ebene, aufgespannt durch die Kraftfahrzeugquerrichtung (Y) und Kraftfahrzeugvertikalrichtung (Z).

11. Stoßfängeranordnung (1) nach einem der vorgenannten Ansprüche, **dadurch gekennzeichnet, dass** der Bund (11) gegenüber einer Längsachse der Hülse (5) an der Rückwand (12) schräg verläuft und somit an die schräge Kontur der Rückwand (12) des Querträgers (2) angepasst ist, wobei die Hülse (5) formschlüssig an der Rückwand (12) anliegt und mit der Rückwand (12) thermisch gefügt ist.
